# EUROPÄISCHE PATENTSCHRIFT

(11) **EP 4 371 413 B1**
(45) Veröffentlichungstag und Bekanntmachung des Hinweises auf die Patenterteilung: **28.01.2026**
(21) Anmeldenummer: 22208269.5
(22) Anmeldetag: 18.11.2022
(51) Int. Cl.: A21B 5/02, A21B 1/48

(54) **BACKVORRICHTUNG MIT EINEM SEGMENTIERTEN STROMSCHIENENPAAR**
BAKING DEVICE COMPRISING A SEGMENTED PAIR OF BUSBARS
DISPOSITIF DE CUISSON COMPRENANT UNE PAIRE DE RAILS CONDUCTEURS SEGMENTÉS

(43) Veröffentlichungstag der Anmeldung: 22.05.2024
(73) Patentinhaber: Bühler Food Equipment GmbH, 2100 Leobendorf (AT)
(72) Erfinder: Bauer, Christian, 3426 Muckendorf an der Donau (AT); Beck, Jan Gregor, 1060 Wien (AT); Kauzinger, Bernhard, 7035 Steinbrunn (AT); Pöhn, Reinhard, 3511 Palt (AT)
(74) Vertreter: Puchberger & Partner Patentanwälte

(56) Entgegenhaltungen:
- WO-A2-2009/100873
- JP-B2- 4 219 114
- JP-U- S5 586 486
- US-A- 2 596 278

## Beschreibung

Die Erfindung betrifft eine Backvorrichtung gemäß dem Oberbegriff des unabhängigen Patentanspruchs.

Insbesondere betrifft die Erfindung eine Backvorrichtung, insbesondere einen Backofen, zur industriellen Herstellung gebackener, bevorzugt essbarer, Produkte, bei der eine Vielzahl an Backplattenvorrichtungen entlang einem Endlosförderer kontinuierlich durch unterschiedliche Bereiche befördert wird. Ein Endlosförderer ist ein endloses Förderorgan wie beispielsweise eine umlaufend angetriebene Förderkette.

Die Backplattenvorrichtungen gattungsgemäßer Backvorrichtung sind meist als Backzangen ausgebildet und umfassen zwei Backplatten, auf die in einer geöffneten Stellung auf die untere Backplatte ein Teig bzw. eine Backmasse aufgetragen wird. In weiterer Folge wird die jeweilige Backzange weiterbefördert, dabei geschlossen und durch einen Backraum bewegt. Der Backraum ist gemäß Stand der Technik meist durch eine Gasheizung beheizt, womit, durch Wärmeleitung in den Backplatten, der zwischen den beiden Backplatten angeordnete Teig gebacken wird.

Hierbei gibt es zwei unterschiedliche Arten von Backöfen. Backöfen, bei denen das Backen des Teigs im Wesentlichen drucklos erfolgt und Backöfen, bei denen durch die Backplattenvorrichtungen Überdruckbackformen gebildet werden.

Nach dem Backraum werden die Backplattenvorrichtungen geöffnet und die gebackenen Waffelblätter können eines nach dem anderen entnommen werden. In weiterer Folge wird wiederum ein Teig auf die geöffnete Backplattenvorrichtung aufgetragen und der Prozess beginnt von neuem. In der Regel sind die Backplattenvorrichtungen eine nach der anderen an dem Endlosförderer angebracht.

Aus dem Stand der Technik sind Vorrichtungen bekannt, bei denen die Backplatten jeweils eine mitfahrende elektrische Heizung aufweisen. Diese mitfahrenden Heizungen werden über Schleifkontakte und feststehende Stromschienen gespeist.

In einer bekannten Ausführung werden Widerstandsheizungen an den Backplatten mit Gleichspannung gespeist. Hierbei muss die Leistungselektronik für den Fall eines Kurzschlusses jedoch durch superflinke NH-Sicherungen geschützt werden, was zu erhöhten Kosten führt. Kurzschlüsse können durch die Widerstandsheizungen der Backplatten selbst bzw. durch ein Übergießen der Backplatten mit Teig verursacht werden. Durch das Übergießen der Backplatten entsteht erhöhter Backabfall, welcher durch die fehlende Wärme im Vergleich zu gasbeheizten Öfen nicht ausgebacken wird und dann zu einem Kurzschluss auf einer Stromschiene führen kann.

Gemäß einer weiteren bekannten Heizung durch Strom werden die Widerstandsheizungen einphasig mit Wechselspannung von einem Wechselrichter gespeist. Dies hat gegenüber einer Gleichspannungsspeisung den Vorteil, dass Kurzschlüsse von der Leistungselektronik erkannt werden und keine zusätzlichen teuren Schutzschaltungen notwendig sind. Die einphasige Ausführung ist technisch einfach realisierbar, hat aber den Nachteil, dass nur ca. 70% der verfügbaren Wechselrichterleistung genutzt werden kann.

Es besteht nun eine Nachfrage nach gattungsgemäßen Backöfen, deren Effizienz verbessert ist. Die Effizienz kann einerseits dadurch verbessert werden, dass der Backofen eine verbesserte Energieeffizienz aufweist und bei gleicher Backleistung geringere Energiekosten hat. Die Effizienz kann aber auch dadurch verbessert werden, dass die Produktion effizienter ist, wobei dies insbesondere durch eine Verringerung des Ausschusses aber auch durch eine Verbesserung der Standzeit bzw. einer Verringerung der Servicezeit bewirkt werden kann.

Aufgabe der Erfindung ist es nun, eine Backvorrichtung mit verbesserter Effizienz zu schaffen.

Die Aufgabe wird insbesondere durch die Merkmalskombination des unabhängigen Patentanspruchs gelöst.

Die Erfindung betrifft insbesondere eine Backvorrichtung zum Herstellen gebackener, bevorzugt essbarer, Produkte. Bevorzugt sind mehrere öffenbare und schließbare Backplattenvorrichtungen vorgesehen.

Insbesondere ist vorgesehen, dass die Backplattenvorrichtungen jeweils zwei Backplatten und eine zwischen den geschlossenen Backplatten gebildete Backform für eine Backmasse bzw. einen Teig aufweisen.

Bevorzugt ist ein Endlosförderer vorgesehen, der die Backplattenvorrichtungen aneinandergereiht kontinuierlich:
- durch einen Backmassenauftragsbereich zum Einbringen einer Backmasse in die geöffneten Backplattenvorrichtungen,
- durch einen Schließbereich zum Schließen und gegebenenfalls Verriegeln der Backplattenvorrichtungen,
- durch einen Backbereich zum Backen der in den Backplattenvorrichtungen angeordneten Backmasse,
- durch einen Öffenbereich zum Öffnen der Backplattenvorrichtungen,
- und durch einen Entnahmebereich zum Entnehmen der aus der Backmasse gebackenen Formkörper befördert.

Bevorzugt ist mindestens ein dem Endlosförderer folgendes, feststehendes Stromschienenpaar vorgesehen, das zwei Stromschienen umfasst.

Bevorzugt ist jede Backplatte mit einer mitfahrenden, elektrischen Heizung, insbesondere einer elektrischen Widerstandsheizung, versehen.

Bevorzugt weist jede Backplatte zwei Schleifkontakte zur elektrischen Verbindung der fahrenden Backplattenvorrichtung mit dem feststehenden Stromschienenpaar auf.

Insbesondere ist in allen Ausführungsformen der eine Schleifkontakt einer Backplatte mit der einen Stromschiene und der andere Schleifkontakt derselben Backplatte mit der anderen Stromschiene des Stromschienenpaars elektrisch verbunden. Dadurch ist die Heizung, insbesondere der Heizwiderstand, dieser Backplatte elektrisch zwischen diesen beiden Stromschienen angeschlossen.

Bevorzugt ist zur Stromversorgung der elektrischen Heizungen eine 3-Phasen Wechselstromquelle mit einem ersten Phasenleiter U, einem zweiten Phasenleiter V und einem dritten Phasenleiter W vorgesehen.

Bevorzugt ist vorgesehen, dass das Stromschienenpaar mindestens drei Abschnitte aufweist, in denen an den beiden Stromschienen unterschiedliche Phasenleiterpaarungen der 3-Phasen Wechselstromquelle angeschlossen sind.

Bevorzugt ist vorgesehen:
- dass an den Stromschienen des ersten Abschnitts die Phasenpaarung erster Phasenleiter U und zweiter Phasenleiter V angeschlossen ist,
- dass an den Stromschienen des zweiten Abschnitts die Phasenpaarung zweiter Phasenleiter V und dritter Phasenleiter W angeschlossen ist,
- und dass an den Stromschienen des dritten Abschnitts die Phasenpaarung dritter Phasenleiter W und erster Phasenleiter U angeschlossen ist.

Bevorzugt sind Isolatoren vorgesehen, die die Stromschienen eines Abschnitts des Stromschienenpaars von den Stromschienen des, entlang des Verlaufs des Stromschienenpaars, angrenzenden Abschnitts elektrisch isolieren.

Insbesondere ist vorgesehen, dass die Isolatoren der Form der Stromschienen angepasst sind und/oder zwei angrenzende Stromschienen fluchtend miteinander verbinden.

Bevorzugt sind mindestens zwei 3-Phasen Wechselstromquellen vorgesehen, wobei die 3-Phasen Wechselstromquellen insbesondere die Ausgänge zweier unterschiedlicher 3-Phasen Wechselrichter sind.

Bevorzugt sind zwei parallel zueinander verlaufende Stromschienenpaare vorgesehen.

Bevorzugt versorgt das erste Stromschienenpaar alle unteren Backplatten mit Strom. Bevorzugt versorgt das zweite Stromschienenpaar alle oberen Backplatten mit Strom.

Gegebenenfalls ist vorgesehen, dass beide Stromschienenpaare von derselben 3-Phasen Wechselstromquelle (14) versorgt werden.

Alternativ ist vorgesehen, dass die Stromschienenpaare durch je eine eigene 3-Phasen Wechselstromquelle versorgt werden.

Gegebenenfalls ist vorgesehen, dass das Stromschienenpaar oder die Stromschienenpaare jeweils mindestens sechs Abschnitte aufweisen.

Gegebenenfalls ist vorgesehen, dass an die Stromschienen dreier Abschnitte die unterschiedlichen Phasenleiterpaarungen einer ersten 3-Phasen Wechselstromquelle angeschlossen sind.

Gegebenenfalls ist vorgesehen, dass an die Stromschienen der anderen drei Abschnitte die unterschiedlichen Phasenleiterpaarungen einer zweiten 3-Phasen Wechselstromquelle angeschlossen sind.

Gegebenenfalls ist vorgesehen, dass, falls weitere Abschnitte, insbesondere weitere drei Abschnitte, vorgesehen sind, die unterschiedlichen Phasenleiterpaarungen mindestens einer weiteren 3-Phasen Wechselstromquelle angeschlossen sind.

Gegebenenfalls sind sechs Abschnitte vorgesehen sind. Gegebenenfalls ist vorgesehen,
- dass an den Stromschienen des ersten Abschnitts die Phasenpaarung erster Phasenleiter U' und zweiter Phasenleiter V' der ersten 3-Phasen Wechselstromquelle angeschlossen ist,
- dass an den Stromschienen des zweiten Abschnitts 13" die Phasenpaarung zweiter Phasenleiter V' und dritter Phasenleiter W' der ersten 3-Phasen Wechselstromquelle 14' angeschlossen ist,
- dass an den Stromschienen des dritten Abschnitts die Phasenpaarung dritter Phasenleiter W' und erster Phasenleiter U' der ersten 3-Phasen Wechselstromquelle angeschlossen ist,
- dass an den Stromschienen des vierten Abschnitts die Phasenpaarung erster Phasenleiter U" und zweiter Phasenleiter V" der zweiten 3-Phasen Wechselstromquelle angeschlossen ist,
- dass an den Stromschienen des fünften Abschnitts die Phasenpaarung zweiter Phasenleiter V" und dritter Phasenleiter W" der zweiten 3-Phasen Wechselstromquelle angeschlossen ist,
- und dass an den Stromschienen des sechsten Abschnitts die Phasenpaarung dritter Phasenleiter W" und erster Phasenleiter U" der zweiten 3-Phasen Wechselstromquelle angeschlossen ist.

Gegebenenfalls ist vorgesehen, dass die beiden 3-Phasen Wechselstromquellen die Stromschienen mit unterschiedlichen, insbesondere mit wählbaren, elektrischen Leistungen versorgen.

Gegebenenfalls ist vorgesehen, dass die Backplattenvorrichtungen im Bereich der Abschnitte der ersten 3-Phasen Wechselstromquelle mit einer anderen Heizleistung beheizt werden als im Bereich der Abschnitte der zweiten 3-Phasen Wechselstromquelle.

Gegebenenfalls ist vorgesehen, dass die erste 3-Phasen Wechselstromquelle mit drei entlang des Verlaufs des Stromschienenpaars aneinander angrenzenden Abschnitten verbunden ist.

Gegebenenfalls ist vorgesehen, dass die zweite 3-Phasen Wechselstromquelle mit drei entlang des Verlaufs des Stromschienenpaars aneinander angrenzenden Abschnitten verbunden ist.

Gegebenenfalls ist vorgesehen, dass zwei entlang des Verlaufs des Stromschienenpaars nacheinander angeordnete unterschiedliche Heizzonen gebildet sind.

Gegebenenfalls ist vorgesehen, dass jede Backplatte immer nur von einem einzigen Abschnitt mit Strom versorgt wird.

Gegebenenfalls ist vorgesehen, dass die Isolatoren entlang des Verlaufs des Stromschienenpaars mindestens so bemessen sind, dass ein Kurzschluss und/oder ein Lichtbogen zwischen zwei angrenzenden Abschnitten der jeweiligen Stromschiene beim darüber Hinwegfahren der Schleifkontakte verhindert ist.

Gegebenenfalls ist vorgesehen, dass alle Abschnitte, in denen an den beiden Stromschienen unterschiedliche Phasenleiterpaarungen einer, also ein und derselben, 3-Phasen Wechselstromquelle angeschlossen sind, dieselbe Länge aufweisen,
Gegebenenfalls ist vorgesehen, dass alle Abschnitte, in denen an den beiden Stromschienen unterschiedliche Phasenleiterpaarungen einer, also ein und derselben, 3-Phasen Wechselstromquelle angeschlossen sind, dieselbe Anzahl an Backplatten mit elektrischer Leistung versorgen.

Gegebenenfalls ist vorgesehen, dass das Stromschienenpaar einen Messabschnitt aufweist.

Gegebenenfalls ist vorgesehen, dass im Messabschnitt eine Messeinrichtung vorgesehen ist, die elektrische Parameter der Backplatten wie insbesondere den elektrischen Widerstand der Heizung der Backplatten und/oder den elektrischen Widerstand bzw. die Isolation gegenüber der Erde misst.

Gegebenenfalls ist vorgesehen, dass die Messeinrichtung laufend, bevorzugt bei jedem Durchlauf, Parameter der durch den Messabschnitt beförderten Backplatten aufnimmt.

Gegebenenfalls ist vorgesehen, dass eine Datenbank vorgesehen ist, in der die aufgenommenen Parameter der Messeinrichtung abspeichert und gegebenenfalls einem die Backplatte identifizierenden Wert zugewiesen werden.

Gegebenenfalls ist der Messabschnitt zusätzlich zu den stromführenden Abschnitten des Stromschienenpaars oder der Stromschienenpaare vorgesehen.

Durch die spezielle Verschaltung der Phasenleiter kann die von der 3-Phasen Wechselstromquelle zur Verfügung gestellte Leistung optimal, insbesondere bis zu 100%, ausgenützt werden.

Die Abschnitte werden insbesondere durch eine Segmentierung des Stromschienenpaars oder der Stromschienenpaare gebildet. Zwischen den Abschnitten sind bevorzugt Isolatoren angeordnet, sodass deren Stromschienen elektrisch voneinander getrennt sind und dadurch an den unterschiedlichen Abschnitten jeweils unterschiedliche Phasenpaarungen angeschlossen sein können.

In allen Ausführungsformen kann zusätzlich zu dem Stromschienenpaar oder zu den Stromschienenpaaren eine geerdete Masse-Stromschiene vorgesehen sein, die als Erdung für die Backplattenvorrichtungen dient. Insbesondere können alle Backplattenvorrichtungen mit einem zusätzlichen Schleifkontakt versehen sein, der mit der Masse-Stromschiene in elektrischem Kontakt steht. Bei dieser Masse-Stromschiene kann auf Isolatoren und Abschnitte verzichtet werden. Insbesondere kann eine einzige durchgehende Masse-Stromschiene für alle Abschnitte vorhanden sein.

Durch Wahl der Anzahl und/oder der Leistung der 3-Phasen Wechselstromquellen kann die Heizleistung und dadurch die Anzahl der Backplattenvorrichtungen der Backvorrichtung bei der Konstruktion der Backvorrichtung frei gewählt werden.

Insbesondere kann eine flexible Skalierung der Anzahl der Backplattenvorrichtungen und damit des Durchsatzes der Backvorrichtung erfolgen. Beispielsweise können zwei 3-Phasen Wechselstromquellen sechs Abschnitte des Stromschienenpaars mit elektrischer Energie versorgen. Beispielsweise können drei 3-Phasen Wechselstromquellen neun Abschnitte des Stromschienenpaars mit elektrischer Energie versorgen. Beispielsweise können vier 3-Phasen Wechselstromquellen zwölf Abschnitte des Stromschienenpaars mit elektrischer Energie versorgen. Beispielsweise können zwei 3-Phasen Wechselstromquellen sechs Abschnitte des Stromschienenpaars für die unteren Backplatten mit elektrischer Energie versorgen und zwei 3-Phasen Wechselstromquellen sechs Abschnitte des Stromschienenpaars für die unteren Backplatten mit elektrischer Energie versorgen. Analog kann dies auch mit drei oder mehr 3-Phasen Wechselstromquellen pro Stromschienenpaar erweitert werden. Geben die unterschiedlichen 3-Phasen Wechselstromquellen unterschiedliche elektrische Leistungen ab, so können unterschiedliche Heizzonen in der Backvorrichtung gebildet sein.

Die Backvorrichtung umfasst insbesondere eine Backplattenvorrichtung, beispielsweise eine Backzange, zur Herstellung unter Überdruck gebackener, knusprig spröder Waffeln aus einer im unausgebackenen Zustand 50-70% Wasser enthaltenden Backmasse, umfassend:
- zwei Traggestelle, die jeweils mindestens einen Träger aufweisen,
- zwei Backplatten, die jeweils an einem der Traggestelle angebracht sind
- und zwei beidseitig der Backplatten angeordnete und über die Träger miteinander verbundene Verbindungsvorrichtungen.

Insbesondere ist die Backvorrichtung als Waffelbackofen zur industriellen Herstellung von Waffeln ausgebildet.

Bevorzugt umfasst die Backplattenvorrichtung Laufrollen, sodass die Backplattenvorrichtung beispielsweise als Backzangenwagen ausgebildet ist. Gegebenenfalls umfasst die Backplattenvorrichtung Führungsrollen zur seitlichen Führung der Backplattenvorrichtung entlang deren Bewegungspfad in der Backvorrichtung.

Gegebenenfalls umfasst die Backplattenvorrichtung Steuerglieder, die zur Steuerung einer Bewegung, beispielsweise zum Öffnen und Schließen der Backplattenvorrichtung, mit Steuergliedern der Backvorrichtung, wie insbesondere mit einer Kulisse der Backvorrichtung, in Wirkkontakt stehen.

Die Konstruktion erlaubt es, die Materialien der Tragrahmen und der Backplatten unabhängig voneinander zu wählen. Dadurch kann ein Backplattenmaterial gewählt werden, das eine hohe Wärmekapazität aufweist und das eine gleichmäßige Wärmeleitung bzw. Wärmebereitstellung über die gesamte Backform ermöglicht.

Backplatten und Tragrahmen können aus den gleichen Materialien bestehen bzw. aus dem gleichen Material gefertigt sein, um einen Unterschied in der thermischen Ausdehnung zu vermeiden. Denkbar ist aber auch, dass die Traggestelle aus einem anderen Material gefertigt sind als die Backplatten.

Insbesondere kann der Tragrahmen aus Gusseisen, beispielsweise aus Sphäroguss gefertigt sein. Die Tragrahmen sind gegebenenfalls aus Profilen zusammengesetzt oder einstückig gegossen. Die Backplatten sind bevorzugt aus Gusseisen, insbesondere aus Sphäroguss gefertigt.

Bevorzugt ist eine Justieranordnung vorgesehen, die eine Einstellung der Lage und/oder des Verlaufs einer Backplatte gegenüber jenem Tragrahmen erlaubt, an dem die Backplatte angebracht ist. Die Justieranordnung umfasst bevorzugt mehrere Stellmittel wie beispielsweise Stellschrauben.

Gegebenenfalls ist vorgesehen, dass die Backplatten jeweils durch die Justieranordnungen mit dem Tragrahmen verbunden sind.

Gegebenenfalls ist vorgesehen, dass die Backplatten ausschließlich durch die Justieranordnungen an den Tragrahmen angebracht sind.

Gegebenenfalls ist vorgesehen, dass eine, insbesondere die erste Verbindungsvorrichtung als Scharnier ausgebildet ist und die andere, insbesondere die zweite Verbindungsvorrichtung als Verriegelungsvorrichtung, sodass die Backplattenvorrichtung als Backzange ausgebildet ist.

Gegebenenfalls ist vorgesehen, dass zur Bildung der Überdruckbackform Abschlussleisten wie Dichtleisten und/oder Dampfleisten vorgesehen sind.

Bevorzugt ist vorgesehen, dass die Leistungsabgaben bzw. die Leistungsaufnahmen aller Heizungen in allen drei Abschnitten einer 3-Phasen Wechselstromquelle gleich groß sind.

Bevorzugt sind jeweils gleich viele Backplattenvorrichtungen mit allen Abschnitten einer Wechselstromquelle verbunden, womit die drei unterschiedlichen Phasen der Wechselstromquelle optimal ausgenützt werden können. Bevorzugt sind die einzelnen Abschnitte, die mit einer Wechselstromquelle bzw. mit deren unterschiedlichen Phasenpaarungen verbunden sind, gleich lang. Die Länge der Abschnitte der ersten Wechselstromquellen kann jedoch von der Länge der Abschnitte der zweiten Wechselstromquellen abweichen.

Bevorzugt ist vorgesehen, dass alle Schleifkontakte einer Backplattenvorrichtung, also die Schleifkontakte der oberen Backplatte und die Schleifkontakte der unteren Backplatte, an einer Seite der Backplattenvorrichtung und insbesondere an der unteren Backplatte der Backplattenvorrichtung angeordnet sind.

Bevorzugt ist vorgesehen, dass die Zuleitung der elektrischen Leistung von den Schleifkontakten zur anderen Seite, insbesondere zur oberen Backplatte, über zwei, über das Scharnier der Backplattenvorrichtung geführte, Leiter erfolgt.

In weiterer Folge wird die Erfindung anhand von exemplarischen Ausführungsformen, insbesondere anhand der Figuren weiter beschrieben.
**Fig. 1** zeigt eine Prinzipskizze von Komponenten einer Backvorrichtung, wobei zur klareren Darstellung nur einige der unteren Backplatten eingezeichnet sind.
**Fig. 2** zeigt eine Prinzipskizze von Komponenten einer Backvorrichtung, wobei einige Backzangen mit oberen und unteren Backplatten eingezeichnet sind.
**Fig. 3** zeigt eine Prinzipskizze einer weiteren möglichen Ausführungsform eines Stromschienenpaars.
**Fig. 4** zeigt eine schematische Schnittdarstellung einer möglichen Ausführungsform einer Backplattenvorrichtung.

Wenn nicht anders angegeben, so entsprechen die Bezugszeichen folgenden Komponenten:
ersten Phasenleiter U, zweiten Phasenleiter V, dritten Phasenleiter W, Backplattenvorrichtung 1, untere Backplatte 2, obere Backplatte 3, Endlosförderer 4, Backmassenauftragsbereich 5, Schließbereich 6, Backbereich 7, Öffenbereich 8, Entnahmebereich 9, Stromschienenpaar 10, Stromschiene 11, Stromschiene 12, Abschnitt (eines Stromschienenpaars) 13, Wechselstromquelle 14, Wechselrichter 15, Messabschnitt 16, Messeinrichtung 17, Datenbank 18, Widerstandsheizung/Heizung 19, Schleifkontakt 20, Isolator 21, Heizwiderstand 22, Abdeckplatte 23, Tragrahmen 24, Scharnier 25, Verriegelungsvorrichtung 26, elektrischer Leiter 27.

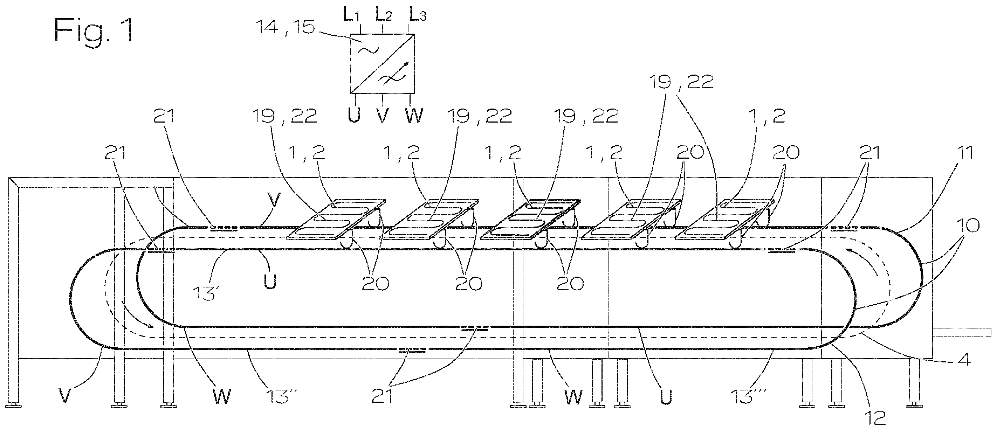

**Fig. 1** zeigt eine schematische Ansicht, insbesondere eine Prinzipskizze, von Komponenten einer Backvorrichtung.

Die Backvorrichtung umfasst einen Endlosförderer 4, der als strichlierte Linie dargestellt ist und gemäß Stand der Technik ausgebildet sein kann. Beispielsweise ist der Endlosförderer 4 eine entlang einer geschlossenen Kontur umlaufende Kette, an der Backplattenvorrichtungen 1 angebracht sind, um sie durch die Backvorrichtung zu befördern. In der vorliegenden Darstellung sind nur einige Backplattenvorrichtungen 1 dargestellt und von diesen auch nur die unteren Backplatten 2, um die Funktionsweise der Komponenten besser beschreiben zu können. In allen Ausführungsformen ist bevorzugt vorgesehen, dass die Backplattenvorrichtungen 1 im Wesentlichen aneinander gereiht entlang des gesamten Endlosförderers 4 angebracht sind.

Als untere Backplatte 2 wird bevorzugt jene Backplatte bezeichnet, die entlang der oberen Förderfläche des Endlosförderers 4 unten angeordnet ist bzw. auf die der Teig aufgetragen wird. Auf die untere Backplatte 2 wird in der Regel auch der Teig oder die Backmasse aufgetragen, der oder die in der Backvorrichtung zu einem gebackenen Produkt bzw. Formkörper ausgebacken wird.

Die Backplatten 2 sind mit einer Heizung 19 versehen. Insbesondere sind die Heizungen 19 jeweils an den Backplatten 2 angebracht und damit ein Teil der Backplattenvorrichtungen 1. Die Heizungen 19 sind elektrische Heizungen und insbesondere Widerstandsheizungen. Die elektrische Energie zum Betreiben der Heizungen 19 wird über ein Stromschienenpaar 10 zur Verfügung gestellt. Das Stromschienenpaar 10 umfasst in der vorliegenden Ausführungsform zwei Stromschienen 11, 12, insbesondere eine erste Stromschiene 11 und eine zweite Stromschiene 12. Das Stromschienenpaar 10 ist bevorzugt dem Endlosförderer 4 bzw. dem Verlauf des Endlosförderers 4 folgend ausgestaltet. Die Backplattenvorrichtungen 1 fahren somit bei ihrer Bewegung durch die Backvorrichtung entlang des Stromschienenpaars 10. Um die elektrische Leistung von dem Stromschienenpaar 10 auf die Backplattenvorrichtungen 1 bzw. deren Heizungen 19 zu übertragen, umfassen die Backplattenvorrichtungen 1 Schleifkontakte 20. Diese Schleifkontakte 20 kontaktieren das Stromschienenpaar 10 während einer Relativbewegung der Backplattenvorrichtungen 1 gegenüber dem Stromschienenpaar 10. In allen Ausführungsformen umfasst bevorzugt jede Heizung 19 mindestens einen Heizwiderstand 22, z.B. eine Heizspirale. Jeder Heizwiderstand 22 ist beidseitig mit je einem Schleifkontakt 20 verbunden. Der Heizwiderstand 22 bevorzugt innenliegend angeordnet und von der Backplatte 2, 3 abgedeckt. Die Darstellung des Heizwiderstands 22 ist nur symbolisch, zum besseren Verständnis des Aufbaus der Backplattenvorrichtung 1.

Das Stromschienenpaar 10 ist in der vorliegenden Ausführungsform in drei Abschnitte 13', 13", 13‴ geteilt bzw. umfasst das Stromschienenpaar 10 drei Abschnitte 13', 13", 13‴. Die Abschnitte 13', 13", 13‴ bzw. deren Stromschienen 11, 12 sind jeweils durch Isolatoren 21 voneinander getrennt. Die Isolatoren 21 sind in allen Ausführungsformen bevorzugt der Form der Stromschienen 11, 12 angepasst. Fährt eine Backplattenvorrichtung 1 mit ihren Schleifkontakten 20 entlang der Stromschienen 11, 12, so wird Leistung von den Stromschienen 11, 12 auf die Heizung 19 übertragen. Im Bereich der Isolatoren 21 wird jedoch keine Leistung übertragen. Vielmehr soll der Isolator 21 jeweils entlang der Erstreckung der Stromschiene 11, 12 derart ausgebildet sein, dass er lang genug ist, um einen Kurzschluss der Stromschienen 11, 12 bzw. der Abschnitte 13', 13", 13‴ zueinander zu verhindern. In einem kurzen Bereich wird gemäß dieser Ausführungsform somit keine elektrische Leistung an die Heizung 19 übertragen.

Zur Bereitstellung der elektrischen Leistung ist ganz allgemein eine Wechselstromquelle 14 vorgesehen. Diese Wechselstromquelle 14 ist in der vorliegenden Ausführungsform bevorzugt ein Wechselrichter 15, der durch eine geeignete Stromquelle gespeist wird.

Die Wechselstromquelle 14 ist bevorzugt eine 3-Phasen Wechselstromquelle 14 mit einem ersten Phasenleiter U, einem zweiten Phasenleiter V und einem dritten Phasenleiter W. Bei der vorliegenden Ausführungsform, bevorzugt in allen Ausführungsformen, sind die Phasenleiter U, V, W der Wechselstromquelle 14 speziell mit den einzelnen Stromschienen 11, 12 der Stromschienenpaare 10 bzw. deren Abschnitten 13 verbunden. So sind an allen drei Abschnitten 13', 13", 13‴ unterschiedliche Phasenleiterpaarungen der 3-Phasen Wechselstromquelle 14 angeschlossen.

Die 3-Phasen Wechselstromquelle 14 hat grundsätzlich drei mögliche unterschiedliche Phasenleiterpaarungen, nämlich U-V, V-W und W-U.

In der vorliegenden Ausführungsform kann beispielsweise an den Stromschienen 11, 12 des ersten Abschnitts 13' die Phasenpaarung erster Phasenleiter U und zweiter Phasenleiter V angeschlossen sein. An den Stromschienen 11, 12 des zweiten Abschnitts 13" kann beispielsweise die Phasenpaarung zweiter Phasenleiter V und dritter Phasenleiter W angeschlossen sein. An den Stromschienen 11, 12 des dritten Abschnitts 13‴ kann beispielsweise die Phasenpaarung dritter Phasenleiter W und erster Phasenleiter U angeschlossen sein.

Durch diese Verschaltung kann die zur Verfügung gestellte Leistung der 3-Phasen Wechselstromquelle 14 optimal ausgenützt werden.

Insbesondere ist vorgesehen, dass die einzelnen Abschnitte 13 im Wesentlichen gleich lang sind und/oder zumindest die gleiche Anzahl an Backplattenvorrichtungen 1 mit Strom versorgen. Dadurch wird in jedem Abschnitt 13', 13", 13‴ dieselbe Leistung von den Backplattenvorrichtungen 1 aufgenommen.

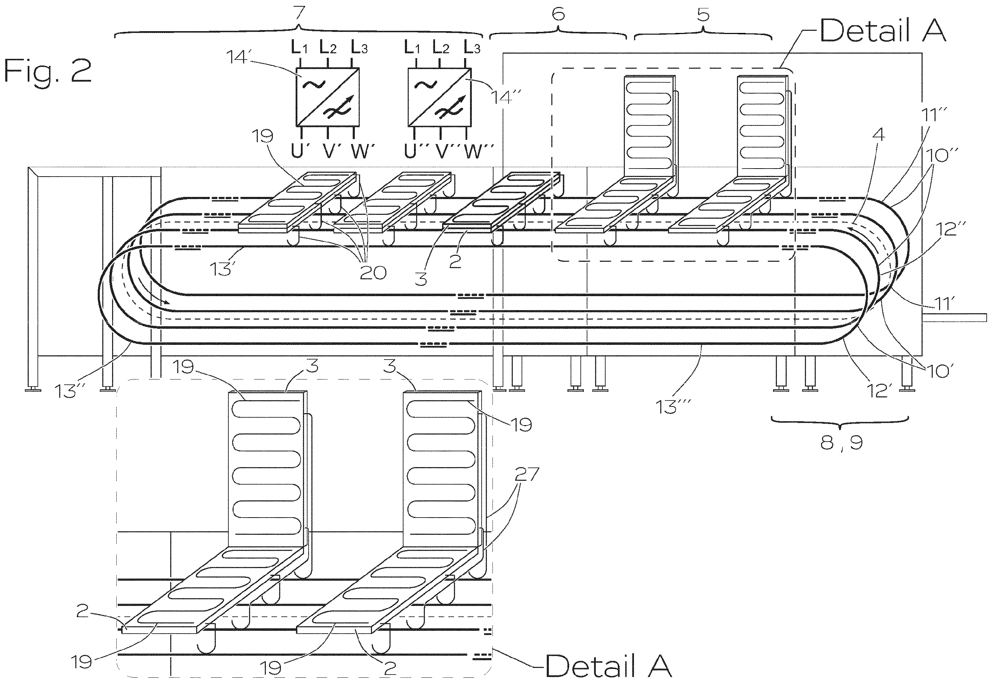

**Fig. 2** zeigt eine Prinzipskizze einer Ausführungsform einer Backvorrichtung, bei der einige Backplattenvorrichtungen 1 mit jeweils einer unteren Backplatte 2 und einer oberen Backplatte 3 eingezeichnet sind. Auch hier sind, zur klareren Darstellung, nicht alle Backplattenvorrichtungen 1 eingezeichnet.

Bei der Backvorrichtung wird in einem Backmassenauftragsbereich 5 ein Teig oder eine Backmasse auf die geöffnete Backplattenvorrichtung 1 aufgetragen. In einem nachfolgenden Schließbereich 6 werden die Backplattenvorrichtungen 1 geschlossen. Im nachfolgenden Backbereich 7 wird die Backmasse in der Backplattenvorrichtung 1 gebacken. Da in der vorliegenden Ausführungsform bevorzugt entlang des gesamten Umlaufs der Backplattenvorrichtungen 1 elektrische Energie an die Heizungen 19 der Backplattenvorrichtungen 1 übertragen wird, erstreckt sich der Backbereich 7 im Grunde genommen über den gesamten Umlauf der Backplattenvorrichtungen 1. Eine Ausnahme hierbei stellt jener Bereich dar, indem in den Backplattenvorrichtungen 1 keine Backmasse vorgesehen ist. So werden die Backplattenvorrichtungen 1 in einem Öffenbereich 8 geöffnet und die gebackenen Formkörper bzw. Produkte werden in einem Entnahmebereich 9 von den Backplattenvorrichtungen 1 abgenommen. Nach diesem Bereich und vor dem Backmassenauftragsbereich 5 befindet sich folglich keine Backmasse an der Backplattenvorrichtung 1. Die grundsätzliche Funktionsweise des Backvorgangs in Backzangen ist hinlänglich bekannt.

Die Konstruktion der Fig. 2 entspricht im Wesentlichen der Konstruktion aus Fig. 1. Zusätzlich zu den unteren Backplatten 2 sind auch obere Backplatten 3 eingezeichnet, die ebenfalls über Schleifkontakte 20 mit einem Stromschienenpaar 10 verbunden sind.

Grundsätzlich könnten die Heizungen 19 der oberen Backplatten 3 und der unteren Backplatten 2 von demselben Stromschienenpaar 10 mit elektrischer Leistung versorgt werden. In der vorliegenden Ausführungsform sind aber zwei Stromschienenpaare 10', 10" vorgesehen, wobei das eine Stromschienenpaar 10' die Heizungen 19 der unteren Backplatten 2 und das zweite Stromschienenpaar 10" die Heizungen 19 der oberen Backplatten 3 mit elektrischer Leistung versorgt.

Bevorzugt sind in dieser Ausführungsform zwei Wechselstromquellen 14' ,14" bzw. zwei Wechselrichter 15', 15" vorgesehen, die jeweils mit einem der Stromschienenpaare 10', 10" verbunden sind. Wie angemerkt, könnte aber auch nur eine 3-Phasen Wechselstromquelle 14 bzw. ein Wechselrichter 15 vorgesehen sein, an den die beiden Stromschienenpaare 10', 10" parallel angeschlossen sind. Analog zur Ausführungsform der Fig. 1 weisen die Stromschienenpaare 10 bzw. deren Stromschienen 11, 12 mehrere Abschnitte 13', 13", 13‴ auf. In analoger Weise zu Fig. 1 sind an diesen Abschnitten 13', 13", 13‴ wiederum die unterschiedlichen Phasenleiterpaarungen angeschlossen.

Die Stromschienenpaare 10 können für die oberen Backplatten 3 und die unteren Backplatten 2 gleich ausgeführt sein und insbesondere nebeneinander verlaufen.

Bevorzugt ist vorgesehen, dass die Schleifkontakte 20 der unteren Backplatten 2 und der oberen Backplatten 3 einseitig von den Backplattenvorrichtungen 1 abstehen. In der vorliegenden Ausführungsform stehen diese vom Bereich der unteren Backplatte 2 in den Innenraum der Umlaufbahn der Backplattenvorrichtungen 1, wo auch die Stromschienenpaare 10', 10" verlaufen. Um nun die elektrische Leistung von diesem Bereich zur oberen Backplatte 3 zu leiten, können von den Schleifkontakten 20 der oberen Backplatten 3 Leiter 27 entlang der unteren Backplatten 2 verlaufen, die dann im Bereich der Verbindung der oberen Backplatte 3 mit der unteren Backplatte 2 zur oberen Backplatte 3 geführt sind, um die Heizungen 19 der oberen Backplatten 3 mit elektrischer Leistung zu versorgen.

Insbesondere sind die unteren Backplatten 2 mit den oberen Backplatten 3 jeweils über Scharniere 25 verbunden. Durch einen flexiblen Leiter 27 im Bereich dieser Scharniere 25 kann die Leistung einfach auf die obere Backplatte 3 übertragen werden.

In den schematischen Darstellungen der Figuren 1 und 2 sind die Stromschienen 11, 12 durch die drei Abschnitte 13', 13", 13‴ bzw. durch die Abschnitte 13', 13", 13‴ und die Isolatoren 21 gebildet. Die Heizungen 19 der Backplattenvorrichtungen 1 werden somit, mit Ausnahme der Bereiche der Isolatoren 21, durchgehend mit elektrischer Leistung versorgt.

Gemäß einer möglichen alternativen Ausführungsform können jedoch weitere Bereiche vorgesehen sein, in denen eine andere elektrische Leistung oder keine elektrische Leistung an die Heizungen 19 der Backplattenvorrichtungen 1 übertragen wird. Beispielsweise kann im Backmassenauftragsbereich 5 ein Bereich vorgesehen sein, in dem keine elektrische Energie an die Heizungen 19 übertragen wird.

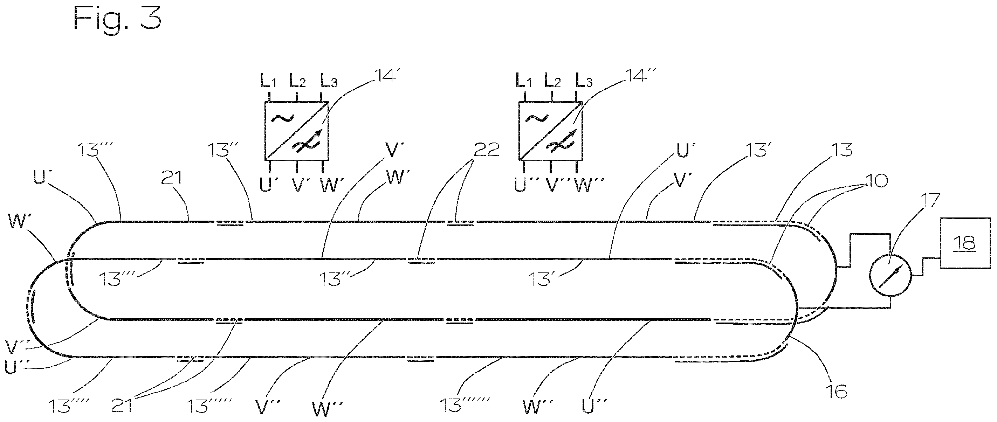

**Fig. 3** zeigt eine Prinzipskizze einer weiteren möglichen Ausgestaltung der Verschaltung der Stromschienenpaare 10 bzw. deren Abschnitte 13. In Fig. 3 ist schematisch ein Stromschienenpaar 10 dargestellt, das mehrere Abschnitte 13 umfasst. Es ist zur klareren Darstellung nur ein Stromschienenpaar 10 eingezeichnet. Wie in Fig. 2 dargestellt, können für die oberen und unteren Backplatten 2, 3 zwei Stromschienenpaare 10', 10" vorgesehen sein.

In der vorliegenden Ausführungsform sind für das Stromschienenpaar 10 zwei Wechselstromquellen 14' und 14" vorgesehen. Diese weisen jeweils 3-Phasenleiter U', V' und W' bzw. U", V" und W" auf. Für zwei Stromschienenpaare 10, analog zu Fig. 2, können vier Wechselstromquellen 14' vorgesehen sein.

Das Stromschienenpaar 10 weist nun sechs Abschnitte 13' bis 13‴‴ auf, die jeweils mit unterschiedlichen Phasenpaarungen der beiden 3-Phasen Wechselstromquellen 14', 14" verbunden sind.

Insbesondere ist die Verschaltung derart ausgebildet,
- dass sechs Abschnitte 13', 13", 13‴, 13"", 13ʺ‴, 13‴‴ vorgesehen sind,
- dass an den Stromschienen 11, 12 des ersten Abschnitts 13' die Phasenpaarung erster Phasenleiter U' und zweiter Phasenleiter V' der ersten 3-Phasen Wechselstromquelle 14' angeschlossen ist,
- dass an den Stromschienen 11, 12 des zweiten Abschnitts 13" die Phasenpaarung zweiter Phasenleiter V' und dritter Phasenleiter W' der ersten 3-Phasen Wechselstromquelle 14' angeschlossen ist,
- dass an den Stromschienen 11, 12 des dritten Abschnitts 13‴ die Phasenpaarung dritter Phasenleiter W' und erster Phasenleiter U' der ersten 3-Phasen Wechselstromquelle 14' angeschlossen ist,
- dass an den Stromschienen 11, 12 des vierten Abschnitts 13ʺʺ die Phasenpaarung erster Phasenleiter U" und zweiter Phasenleiter V" der zweiten 3-Phasen Wechselstromquelle 14" angeschlossen ist,
- dass an den Stromschienen 11, 12 des fünften Abschnitts 13‴ʺ die Phasenpaarung zweiter Phasenleiter V" und dritter Phasenleiter W" der zweiten 3-Phasen Wechselstromquelle 14" angeschlossen ist,
- und dass an den Stromschienen 11, 12 des sechsten Abschnitts 13‴‴ die Phasenpaarung dritter Phasenleiter W" und erster Phasenleiter U" der zweiten 3-Phasen Wechselstromquelle 14" angeschlossen ist.

Dieselbe Schaltung kann auch für die oberen Backplatten 3 vorgesehen sein.

Durch diese Verschaltung können unterschiedliche Abschnitte 13 mit unterschiedlicher elektrischer Leistung versorgt werden, womit unterschiedliche Heizzonen gebildet werden können.

Beispielsweise kann die erste 3-Phasen Wechselstromquelle 14' eine andere elektrische Leistung bereitstellen als die zweite 3-Phasen Wechselstromquelle 14", womit die mit den unterschiedlichen Wechselstromquellen 14', 14" verbundenen Heizungen 19 eine unterschiedliche Heizleistung aufnehmen/abgeben. Dadurch können die Backplattenvorrichtungen 1 in unterschiedlichen Bereichen entlang des Umlaufs unterschiedlich beheizt werden.

Bevorzugt kann die elektrische Leistung der unterschiedlichen 3-Phasen Wechselstromquellen 14', 14", insbesondere durch unterschiedliche 3-Phasen Wechselrichter 15 eingestellt bzw. gewählt werden. Dadurch können unterschiedliche Backzonen in der Backvorrichtung 1 gebildet werden, deren Heizleistungen bzw. Backtemperaturen individuell gewählt werden können.

Das Stromschienenpaar 10 der Ausführung der Fig. 3 umfasst zudem einen weiteren Bereich, nämlich einen Messabschnitt 16. Ein derartiger Bereich kann in allen Ausführungsformen vorgesehen sein. In diesem Messabschnitt 16 ist eine Messeinrichtung 17 vorgesehen. Beim Durchfahren des Messabschnitts 16 kann die Messeinrichtung 17 Parameter der Backplattenvorrichtungen 1 aufnehmen. Beispielsweise kann eine Widerstandsmessung an den Heizungen 19 der Backplattenvorrichtungen 1 vorgenommen werden. Die Parameter bzw. die Daten der Parameter können in einer Datenbank 18 abgespeichert und gegebenenfalls weiterverarbeitet werden. Die Messeinrichtung 17 kann eine laufende Überprüfung der Backplattenvorrichtungen 1 vornehmen, wodurch frühzeitig erkannt werden kann, ob die Heizungen 19 bzw. die Backplattenvorrichtungen 1 schadhaft sind oder werden. Dadurch kann die Effizienz der Backvorrichtung durch Früherkennung eines Schadens verbessert werden.

Bevorzugt sind bei der Ausführungsform der Fig. 3 jeweils gleich viele Backplattenvorrichtungen 1 mit allen Abschnitten 13 einer Wechselstromquelle 14 verbunden, womit die drei unterschiedlichen Phasen der Wechselstromquelle 14 optimal ausgenützt werden können. Bevorzugt sind die einzelnen Abschnitte 13, die mit einer Wechselstromquelle 14 bzw. mit deren unterschiedlichen Phasenpaarungen verbunden sind, gleich lang. Die Länge der Abschnitte 13 der ersten Wechselstromquellen 14' kann jedoch von der Länge der Abschnitte 13 der zweiten Wechselstromquellen 14" abweichen.

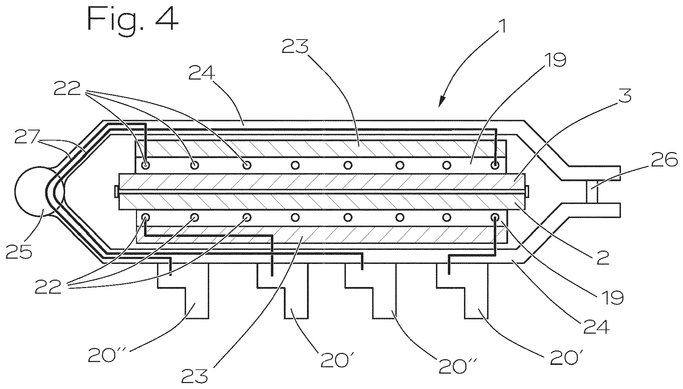

**Fig. 4** zeigt eine schematische Schnittdarstellung einer möglichen Ausführungsform einer Backplattenvorrichtung 1 zur Verwendung in der Backvorrichtung, wie sie beispielsweise in einer Backvorrichtung gemäß Fig.1, Fig. 2 oder Fig. 3 eingesetzt werden kann. Die Backplattenvorrichtung 1 umfasst eine untere Backplatte 2 und eine obere Backplatte 3. Eine Vielzahl derartiger Backplattenvorrichtungen 1 kann in den Ausführungsformen der Figuren 1, 2 und 3 entlang eines Endlosförderers 4 angebracht sein, um durch die Backvorrichtung befördert zu werden.

Sowohl die untere Backplatte 2 als auch die obere Backplatte 3 ist jeweils mit einer Heizung 19 versehen. Die Heizung 19 ist bevorzugt eine elektrische Heizung und insbesondere eine Widerstandsheizung. Hierzu kann eine wärmeleitende Platte, beispielsweise eine Aluminiumplatte, an der Rückseite der Backplatten 2, 3 angebracht sein. Bevorzugt ist diese wärmeleitende Platte wärmeleitend und bevorzugt flächig mit der Rückseite der jeweiligen Backplatte 2, 3 verbunden. In dieser wärmeleitenden Platte kann ein Heizwiderstand 22 wie beispielsweise eine Heizspirale eingelegt sein. Bevorzugt ist dieser Heizwiderstand 22 mäanderförmig, schleifenförmig bzw. flächig entlang der Backplatten 2, 3 angeordnet, um diese im Wesentlichen gleichmäßig zu beheizen. Auf der Außenseite dieser Platten bzw. der Heizwiderstände 22 kann eine äußere Abdeckplatte 23 vorgesehen sein.

Alternativ kann der Heizwiderstand 22 in allen Ausführungsformen in eine in der Rückseite der Backplatte 2, 3 vorgesehenen Nut angeordnet sein, womit die wärmeleitende Platte entfallen kann. Auch hier können die Heizwiderstände 22 mäanderförmig bzw. flächig angeordnet sein.

Die Heizwiderstände 22 sind in allen Ausführungsformen bevorzugt innenliegend angeordnet und daher nicht sichtbar. Die schematischen Darstellungen der Fig. 1 und Fig. 2 zeigen die Heizwiderstände 22 nur symbolisch zum besseren Verständnis des Aufbaus der Heizungen 19.

Grundsätzlich kann die Backplattenvorrichtung 1 selbsttragend ausgebildet sein, wobei die untere Backplatte 2 jeweils direkt scharnierartig mit der oberen Backplatte 3 verbunden ist. In der vorliegenden Ausführungsform ist jedoch ein Tragrahmen 24 vorgesehen, der zwei über ein Scharnier 25 verbundene Rahmenteile umfasst. Die Rahmenteile tragen jeweils eine der Backplatten 2, 3. Insbesondere sind die Rahmenteile über Stellschrauben mit den Backplatten 2, 3 verbunden, sodass die Form bzw. die Lage der Backplatten 2, 3 gegenüber dem Tragrahmen 24 eingestellt werden können. Zudem kann eine Verriegelungsvorrichtung 26 vorgesehen sein, um eine Überdruckbackform zu bilden.

Zur Übertragung der elektrischen Leistung an die Heizungen 19 sind Schleifkontakte 20' und 20" vorgesehen. Die Schleifkontakte 20' versorgen die Heizung 19 der unteren Backplatte 2 mit elektrischer Leistung. Die Schleifkontakte 20" versorgen die Heizung 19 der oberen Backplatte 3 mit elektrischer Leistung.

In dieser Ausführungsform, bevorzugt in allen Ausführungsformen, stehen die Schleifkontakte 20 in eine Richtung von der Backplattenvorrichtung 1 ab. Dadurch können die Stromschienenpaare 10 parallel zueinander angeordnet werden.

Um nun die Stromversorgung von der einen Seite der Backplattenvorrichtung 1 auf die andere Seite zu leiten, sind Leiter 27 vorgesehen, die sich von den Schleifkontakten 20" über den Bereich des Scharniers 25 zur Heizung 19 der oberen Backplatte 3 erstrecken. Die Leiter 27 sind zumindest im Bereich des Scharniers 25 flexibel bzw. beweglich ausgebildet, um ein Öffnen bzw. ein Schließen der Backplattenvorrichtung 1 zu ermöglichen.

Bevorzugt werden im Messabschnitt 16 die Stromversorgungen von den Heizungen 19 der Backplatten 2, 3 getrennt. In diesem Abschnitt wird bevorzugt anstelle der Energieversorgung der Heizung 19 eine Messung des ohmschen Widerstands der Heizwiderstände 22, insbesondere der Heizwicklungen, vorgenommen. Alternativ oder zusätzlich kann eine Widerstandsmessung bzw. eine Isolationsmessung gegenüber der Erde durchgeführt werden. Mit der ohmschen Messung erfolgt bevorzugt pro Backplatte 2, 3 eine Diagnose über den Zustand des Heizwiderstands 22 und gegebenenfalls eine Trendanalyse, um vorausschauend Defekte zu erkennen. Dies geschieht insbesondere durch eine Datenverarbeitung, die beispielsweise eine Widerstandsänderung über die Zeit detektiert. Mögliche detektierbare Defekte können sein:
- eine durchgebrannte Sicherung im Klemmkasten der Backplattenvorrichtung 1
- der Verschleiß der Stromabnehmer bzw. der Schleifkontakte 20
- allgemeine Kontaktprobleme
- ein sich anbahnender Kurzschluss des Heizwiderstands 22 bzw. der Heizwicklung
- ein Defekt des Heizwiderstands 22, beispielsweise eine durchgebrannte Heizwicklung.

Bei einem schleichenden Defekt bzw. einem sich anbahnenden Defekt kann ein Warnsignal ausgegeben werden. Beispielsweise erfolgt eine Fehlermeldung mit konkreter Identifikation einer Backplatte 2, 3 bzw. einer Backplattennummer. Beim Erkennen eines nahenden Defektes kann, beispielsweise durch einen elektromagnetischen Betätiger, die betroffene Backplatte 2, 3 von der Stromversorgung getrennt werden. So können beispielsweise die Schleifkontakte 20 dieser Backplattenvorrichtung 1 eingeklappt und dadurch von dem Stromschienenpaar 10 getrennt werden. Die Steuerungseinrichtung der Backvorrichtung kann in diesem Fall den Teigaufguss für diese Backplatte 2, 3 einstellen.

Die Messung der einzelnen Widerstände der Backplatten 2, 3 kann beispielsweise im kalten Zustand des Ofens vor dem Backbetrieb, laufend in Betrieb (online) oder im Servicebetrieb für einzelne Backplatten 2, 3 gemessen werden.

Bevorzugt ist der Messabschnitt 16 nur so lang, dass jeweils nur die Stromabnehmer einer Backplatte 2, 3 mit diesem in elektrischem Kontakt stehen. Dadurch kann die Messung einer einzelnen Backplatte 2, 3 erfolgen. Alternativ ist der Messabschnitt 16 nur so lang, dass jeweils nur die Stromabnehmer einer Backplattenvorrichtung 1 mit diesem in elektrischem Kontakt stehen. Dadurch kann die Messung einer einzelnen Backplattenvorrichtung 1 erfolgen.

Grundsätzlich kann der Messabschnitt 16 in einem beliebigen Bereich entlang des Stromschienenpaars 10 angeordnet sein. Zweckmäßig erscheint die Platzierung im Bereich des hinteren Umlenkpunktes des Ofens, da hier im Servicebetrieb Backplatten 2, 3 gezielt positioniert werden können. Zudem ist im Bereich des hinteren Umlenkpunktes die Zugänglichkeit gegenüber anderen Bereichen besser.

## Patentansprüche

1. **Backvorrichtung** zum Herstellen gebackener, bevorzugt essbarer, Produkte,
- wobei mehrere öffenbare und schließbare Backplattenvorrichtungen (1) vorgesehen sind,
- wobei die Backplattenvorrichtungen (1) jeweils zwei Backplatten (2,3) und eine zwischen den geschlossenen Backplatten (2,3) gebildete Backform für eine Backmasse aufweisen,
- wobei ein Endlosförderer (4) vorgesehen ist, der die Backplattenvorrichtungen (1) aneinandergereiht kontinuierlich:
- durch einen Backmassenauftragsbereich (5) zum Einbringen einer Backmasse in die geöffneten Backplattenvorrichtungen (1),
- durch einen Schließbereich (6) zum Schließen und gegebenenfalls Verriegeln der Backplattenvorrichtungen (1),
- durch einen Backbereich (7) zum Backen der in den Backplattenvorrichtungen (1) angeordneten Backmasse,
- durch einen Öffenbereich (8) zum Öffnen der Backplattenvorrichtungen (1),
- und durch einen Entnahmebereich (9) zum Entnehmen der aus der Backmasse gebackenen Formkörper befördert,
- wobei mindestens ein dem Endlosförderer (4) folgendes, feststehendes Stromschienenpaar (10) vorgesehen ist, das zwei Stromschienen (11, 12) umfasst,
- wobei jede Backplatte (2,3) mit einer mitfahrenden, elektrischen Heizung (19), insbesondere einer elektrischen Widerstandsheizung, versehen ist,
- wobei jede Backplatte (2,3) zwei Schleifkontakte (20) zur elektrischen Verbindung der fahrenden Backplattenvorrichtung (1) mit dem feststehenden Stromschienenpaar (10) aufweist,
- und wobei zur Stromversorgung der elektrischen Heizungen (19) eine 3-Phasen Wechselstromquelle (14) mit einem ersten Phasenleiter (U), einem zweiten Phasenleiter (V) und einem dritten Phasenleiter (W) vorgesehen ist,
**dadurch gekennzeichnet,**
- **dass** das Stromschienenpaar (10) mindestens drei Abschnitte (13) aufweist, in denen an den beiden Stromschienen (11,12) unterschiedliche Phasenleiterpaarungen der 3-Phasen Wechselstromquelle (14) angeschlossen sind.

2. Backvorrichtung nach Anspruch 1, **dadurch gekennzeichnet,**
- **dass** drei Abschnitte (13', 13", 13"') vorgesehen sind,
- **dass** an den Stromschienen (11, 12) des ersten Abschnitts (13') die Phasenpaarung erster Phasenleiter (U) und zweiter Phasenleiter (V) angeschlossen ist,
- **dass** an den Stromschienen (11, 12) des zweiten Abschnitts (13") die Phasenpaarung zweiter Phasenleiter (V) und dritter Phasenleiter (W) angeschlossen ist,
- und **dass** an den Stromschienen (11, 12) des dritten Abschnitts (13‴) die Phasenpaarung dritter Phasenleiter (W) und erster Phasenleiter (U) angeschlossen ist.

3. Backvorrichtung nach Anspruch 1 oder 2, **dadurch gekennzeichnet,**
- **dass** Isolatoren (21) vorgesehen sind, die die Stromschienen (11, 12) eines Abschnitts des Stromschienenpaars (10) von den Stromschienen (11, 12) des, entlang des Verlaufs des Stromschienenpaars (10), angrenzenden Abschnitts (13) elektrisch isolieren,
- wobei die Isolatoren (21) bevorzugt der Form der Stromschienen (11, 12) angepasst sind und zwei angrenzende Stromschienen (11, 12) fluchtend miteinander verbinden,
- insbesondere dass die Isolatoren (21) entlang des Verlaufs des Stromschienenpaars (10) mindestens so bemessen sind, dass ein Kurzschluss und/oder ein Lichtbogen zwischen zwei angrenzenden Abschnitten (13) der jeweiligen Stromschiene (11, 12) beim darüber Hinwegfahren der Schleifkontakte (20) verhindert ist.

4. Backvorrichtung nach einem der Ansprüche 1 bis 3, **dadurch gekennzeichnet,**
**dass** mindestens zwei 3-Phasen Wechselstromquellen (14', 14") vorgesehen sind, wobei die 3-Phasen Wechselstromquellen (14', 14") insbesondere die Ausgänge zweier unterschiedlicher 3-Phasen Wechselrichter (15) sind.

5. Backvorrichtung nach einem der Ansprüche 1 bis 4, **dadurch gekennzeichnet,**
- **dass** zwei parallel zueinander verlaufende Stromschienenpaare (10', 10") vorgesehen sind,
- wobei das erste Stromschienenpaar (10') alle unteren Backplatten (2) mit Strom versorgt,
- und wobei das zweite Stromschienenpaar (10") alle oberen Backplatten (3) mit Strom versorgt.

6. Backvorrichtung nach Anspruch 5, **dadurch gekennzeichnet,**
- **dass** beide Stromschienenpaare (10', 10") von derselben 3-Phasen Wechselstromquelle (14) versorgt werden,
- oder dass die Stromschienenpaare (10', 10") durch je eine eigene 3-Phasen Wechselstromquelle (14', 14") versorgt werden.

7. Backvorrichtung nach einem der Ansprüche 4 bis 6, **dadurch gekennzeichnet,**
- **dass** das Stromschienenpaar (10) oder die Stromschienenpaare (10', 10") jeweils mindestens sechs Abschnitte (13) aufweisen,
- wobei an die Stromschienen (11,12) dreier Abschnitte (13) die unterschiedlichen Phasenleiterpaarungen einer ersten 3-Phasen Wechselstromquelle (14') angeschlossen sind,
- und wobei an die Stromschienen (11,12) der anderen drei Abschnitte (13) die unterschiedlichen Phasenleiterpaarungen einer zweiten 3-Phasen Wechselstromquelle (14") angeschlossen sind,
- und wobei, falls weitere Abschnitte (13) vorgesehen sind, die unterschiedlichen Phasenleiterpaarungen mindestens einer weiteren 3-Phasen Wechselstromquelle (14") angeschlossen sind.

8. Backvorrichtung nach Anspruch 7, **dadurch gekennzeichnet,**
- **dass** sechs Abschnitte (13', 13", 13‴, 13ʺʺ, 13ʺ‴, 13""") vorgesehen sind,
- **dass** an den Stromschienen (11, 12) des ersten Abschnitts (13') die Phasenpaarung erster Phasenleiter (U') und zweiter Phasenleiter (V') der ersten 3-Phasen Wechselstromquelle (14') angeschlossen ist,
- **dass** an den Stromschienen (11, 12) des zweiten Abschnitts (13") die Phasenpaarung zweiter Phasenleiter (V') und dritter Phasenleiter (W') der ersten 3-Phasen Wechselstromquelle (14') angeschlossen ist,
- **dass** an den Stromschienen (11, 12) des dritten Abschnitts (13‴) die Phasenpaarung dritter Phasenleiter (W') und erster Phasenleiter (U') der ersten 3-Phasen Wechselstromquelle (14') angeschlossen ist,
- **dass** an den Stromschienen (11, 12) des vierten Abschnitts (13"") die Phasenpaarung erster Phasenleiter (U") und zweiter Phasenleiter (V") der zweiten 3-Phasen Wechselstromquelle (14") angeschlossen ist,
- **dass** an den Stromschienen (11, 12) des fünften Abschnitts (13‴ʺ) die Phasenpaarung zweiter Phasenleiter (V") und dritter Phasenleiter (W") der zweiten 3-Phasen Wechselstromquelle (14") angeschlossen ist,
- und **dass** an den Stromschienen (11, 12) des sechsten Abschnitts (13""") die Phasenpaarung dritter Phasenleiter (W") und erster Phasenleiter (U") der zweiten 3-Phasen Wechselstromquelle (14") angeschlossen ist.

9. Backvorrichtung nach einem der Ansprüche 4 bis 8, **dadurch gekennzeichnet,**
- **dass** die beiden 3-Phasen Wechselstromquellen (14', 14") die Stromschienen (11, 12) mit unterschiedlichen, insbesondere mit wählbaren, elektrischen Leistungen versorgen,
- und insbesondere dass die Backplattenvorrichtungen (1) im Bereich der Abschnitte (13', 13", 13‴) der ersten 3-Phasen Wechselstromquelle (14') mit einer anderen Heizleistung beheizt werden als im Bereich der Abschnitte (13"", 13ʺ‴, 13‴‴) der zweiten 3-Phasen Wechselstromquelle (14").

10. Backvorrichtung nach Anspruch 9, **dadurch gekennzeichnet,**
- **dass** die erste 3-Phasen Wechselstromquelle (14', 14") mit drei entlang des Verlaufs des Stromschienenpaars (10) aneinander angrenzenden Abschnitten (13) verbunden ist,
- **dass** die zweite 3-Phasen Wechselstromquelle (14', 14") mit drei entlang des Verlaufs des Stromschienenpaars (10) aneinander angrenzenden Abschnitten (13) verbunden ist,
- und **dass** dadurch zwei entlang des Verlaufs des Stromschienenpaars (10) nacheinander angeordnete unterschiedliche Heizzonen gebildet sind.

11. Backvorrichtung nach einem der Ansprüche 1 bis 10, **dadurch gekennzeichnet,**
**dass** jede Backplatte (2, 3) immer nur von einem einzigen Abschnitt (13) mit Strom versorgt wird.

12. Backvorrichtung nach einem der Ansprüche 1 bis 11, **dadurch gekennzeichnet,**
- **dass** alle Abschnitte (13), in denen an den beiden Stromschienen (11,12) unterschiedliche Phasenleiterpaarungen einer 3-Phasen Wechselstromquelle (14) angeschlossen sind, dieselbe Länge aufweisen,
- und/oder dass alle Abschnitte (13), in denen an den beiden Stromschienen (11,12) unterschiedliche Phasenleiterpaarungen einer 3-Phasen Wechselstromquelle (14) angeschlossen sind, dieselbe Anzahl an Backplatten (2, 3) mit elektrischer Leistung versorgen.

13. Backvorrichtung nach einem der Ansprüche 1 bis 12, **dadurch gekennzeichnet,**
- **dass** das Stromschienenpaar (10) einen Messabschnitt (16) aufweist,
- und **dass** im Messabschnitt (16) eine Messeinrichtung (17) vorgesehen ist, die elektrische Parameter der Backplatten (2, 3) wie insbesondere den elektrischen Widerstand der Heizung (19) der Backplatten (2, 3) und/oder den elektrischen Widerstand bzw. die Isolation gegenüber der Erde misst.

14. Backvorrichtung nach Anspruch 13, **dadurch gekennzeichnet,**
- **dass** die Messeinrichtung (17) laufend, bevorzugt bei jedem Durchlauf, Parameter der durch den Messabschnitt (16) beförderten Backplatten (2, 3) aufnimmt,
- insbesondere dass eine Datenbank (18) vorgesehen ist, in der die aufgenommenen Parameter der Messeinrichtung (17) abspeichert und gegebenenfalls einem die Backplatte (2, 3) identifizierenden Wert zugewiesen werden.

15. Backvorrichtung nach einem der Ansprüche 13 oder 14, **dadurch gekennzeichnet, dass** der Messabschnitt (16) zusätzlich zu den stromführenden Abschnitten (13) des Stromschienenpaars (10) oder der Stromschienenpaare (10) vorgesehen ist.

## Claims

1. A **baking device** for producing baked, preferably edible, products,
- wherein a plurality of openable and closable baking plate devices (1) are provided,
- wherein each baking plate device (1) has two baking plates (2,3) and a baking mould for a baking mass formed between the closed baking plates (2,3),
- wherein an endless conveyor (4) is provided, which continuously conveys the baking plate devices (1) one after the other through:
- a baking mass application region (5) for introducing a baking mass into the opened baking plate devices (1),
- a closing region (6) for closing and optionally locking the baking plate devices (1),
- a baking region (7) for baking the baking mass arranged in the baking plate devices (1),
- an opening region (8) for opening the baking plate devices (1),
- and through a removal region (9) for removing the moulded bodies baked from the baking mass,
- wherein at least one stationary busbar pair (10) following the endless conveyor (4) is provided, which comprises two busbars (11,12),
- wherein each baking plate (2,3) is equipped with a travelling electrical heater (19), in particular an electrical resistance heater,
- wherein each baking plate (2,3) has two sliding contacts (20) to electrically connect the moving baking plate device (1) to the stationary busbar pair (10),
- and wherein, for supplying power to the electrical heaters (19), a 3-phase AC power source (14) having a first phase conductor (U), a second phase conductor (V), and a third phase conductor (W) is provided,
**characterised**
- **in that** the busbar pair (10) has at least three sections (13), where different phase-conductor pairings of the 3-phase AC power source (14) are connected to the two busbars (11, 12).

2. The baking device according to claim 1, **characterised**
- **in that** three sections (13', 13", 13‴) are provided,
- **in that** the phase pairing of first phase conductor (U) and second phase conductor (V) is connected to the busbars (11,12) of the first section (13'),
- **in that** the phase pairing of second phase conductor (V) and third phase conductor (W) is connected to the busbars (11,12) of the second section (13"),
- and **in that** the phase pairing of third phase conductor (W) and first phase conductor (U) is connected to the busbars (11,12) of the third section (13‴).

3. The baking device according to claim 1 or 2, **characterised**
- **in that** insulators (21) are provided which electrically isolate the busbars (11,12) of one section of the busbar pair (10) from the busbars (11,12) of the adjacent section (13) extending along the course of the busbar pair (10),
- the insulators (21) being preferably adapted to the shape of the busbars (11,12) and connecting two adjacent busbars (11, 12) flush with each other,
- in particular in that the insulators (21) are dimensioned along the course of the busbar pair (10) at least such that a short circuit and/or an electric arc between two adjacent sections (13) of the respective busbar (11,12) is prevented when the sliding contacts (20) pass over them.

4. The baking device according to one of claims 1 to 3, **characterised in that** at least two 3-phase AC power sources (14', 14") are provided, the 3-phase AC power sources (14', 14") being in particular the outputs of two different 3-phase inverters (15).

5. The baking device according to one of claims 1 to 4, **characterised**
- **in that** two busbar pairs (10',10") that are in parallel to one another are provided,
- the first busbar pair (10') supplying power to all lower baking plates (2),
- and the second busbar pair (10") supplying power to all upper baking plates (3).

6. The baking device according to claim 5, **characterised**
- **in that** both busbar pairs (10',10") are supplied by the same 3-phase AC power source (14),
- or in that each busbar pair (10', 10") is supplied by a dedicated 3-phase AC power source (14', 14").

7. The baking device according to one of claims 4 to 6, **characterised in**
- **that** the busbar pair (10) or the busbar pairs (10',10") each have at least six sections (13),
- different phase-conductor pairings of a first 3-phase AC power source (14') being connected to the busbars (11,12) of three sections (13),
- and the different phase-conductor pairings of a second 3-phase AC power source (14") being connected to the busbars (11,12) of the other three sections (13),
- and, in case further sections (13) are provided, the different phase-conductor pairings being connected to at least one further 3-phase AC power source.

8. The baking device according to claim 7, **characterised**
- **in that** six sections (13', 13", 13‴, 13ʺʺ, 13ʺʺ′, 13""") are provided,
- **in that** the phase pairing of first phase conductor (U') and second phase conductor (V') of the first 3-phase AC power source (14') is connected to the busbars (11, 12) of the first section (13'),
- **in that** the phase pairing of second phase conductor (V') and third phase conductor (W') of the first 3-phase AC power source (14') is connected to the busbars (11, 12) of the second section (13"),
- **in that** the phase pairing of third phase conductor (W') and first phase conductor (U') of the first 3-phase AC power source (14') is connected to the busbars (11,12) of the third section (13‴),
- **in that** the phase pairing of first phase conductor (U") and second phase conductor (V") of the second 3-phase AC power source (14") is connected to the busbars (11,12) of the fourth section (13ʺʺ),
- **in that** the phase pairing of second phase conductor (V") and third phase conductor (W") of the second 3-phase AC power source (14") is connected to the busbars (11,12) of the fifth section (13ʺʺ′),
- and **in that** the phase pairing of third phase conductor (W") and first phase conductor (U') of the second 3-phase AC power source (14") is connected to the busbars (11, 12) of the sixth section (13""").

9. The baking device according to one of claims 4 to 8, **characterised**
- **in that** the two 3-phase AC power sources (14',14") supply the busbars (11,12) with different, in particular selectable, electrical powers,
- and in particular in that the baking plate devices (1) in the region of the first sections (13', 13", 13‴) of the first 3 phase AC power source (14') are heated with a different heating power than the baking plate devices in the region of the sections (13ʺʺ, 13ʺʺ′, 13‴‴) of the second 3-phase AC power source (14").

10. The baking device according to claim 9, **characterised**
- **in that** the first 3-phase AC power source (14',14") is connected to three sections (13) that are adjacent to one another along the course of the busbar pair (10),
- **in that** the second 3-phase AC power source (14',14") is connected to three sections (13) that are adjacent to one another along the course of the busbar pair (10),
- and **in that** thereby two different heating zones located one after the other are formed along the course of the busbar pair (10).

11. The baking device according to one of claims 1 to 10, **characterised in that** each baking plate (2, 3) is supplied with power only by a single section (13).

12. The baking device according to one of claims 1 to 11, **characterised**
- **in that** all sections (13) where different phase-conductor pairs of a 3-phase AC power source (14) are connected to the two busbars (11,12), have the same length,
- and/or in that all sections (13) where different phase-conductor pairs of a 3-phase AC power source (14) are connected to the two busbars (11,12), supply the same number of baking plates (2, 3) with electrical power.

13. The baking device according to one of claims 1 to 12, **characterised**
- **in that** the busbar pair (10) has a measuring section (16),
- and **in that** a measuring equipment (17) is provided in the measuring section (16), which measures electrical parameters of the baking plates (2,3), such as in particular the electrical resistance of the heater (19) of the baking plates (2, 3) and/or the electrical resistance or insulation to ground.

14. The baking device according to claim 13, **characterised**
- **in that** the measuring equipment (17) continuously records, preferably with each pass, parameters of the baking plates (2,3) conveyed through the measuring section (16),
- in particular in that a database (18) is provided, in which the recorded parameters of the measuring equipment (17) are stored and optionally assigned to a value identifying the baking plate (2,3).

15. The baking device according to claim 13 or 14, **characterised in that** the measuring section (16) is provided in addition to the current-carrying sections (13) of the busbar pair (10) or the busbar pairs (10',10").

## Revendications

1. **Dispositif de cuisson** pour la fabrication de produits cuits, de préférence comestibles,
- dans lequel plusieurs dispositifs à plaques de cuisson (1) ouvrables et fermables sont prévus,
- dans lequel les dispositifs à plaques de cuisson (1) présentent chacun deux plaques de cuisson (2, 3) et un moule de cuisson formé entre les plaques de cuisson (2, 3) fermées pour une pâte à cuire,
- dans lequel un convoyeur sans fin (4) est prévu, qui transporte les dispositifs à plaques de cuisson (1) alignés les uns à la suite des autres de manière continue :
- à travers une zone d'application de pâte (5) pour introduire une pâte dans les dispositifs à plaques de cuisson (1) ouverts,
- à travers une zone de fermeture (6) pour fermer et, éventuellement, verrouiller les dispositifs à plaques de cuisson (1),
- à travers une zone de cuisson (7) pour cuire la pâte disposée dans les dispositifs à plaques de cuisson (1),
- à travers une zone d'ouverture (8) pour ouvrir les dispositifs à plaques de cuisson (1),
- et à travers une zone de prélèvement (9) pour prélever les produits moulés cuits à partir de la pâte,
- dans lequel au moins une paire de barres conductrices fixes (10) est prévue suivant le convoyeur sans fin (4), laquelle comprend deux barres conductrices (11, 12),
- dans lequel chaque plaque de cuisson (2, 3) est pourvue d'un chauffage électrique (19) mobile, en particulier un chauffage électrique à résistance,
- dans lequel chaque plaque de cuisson (2, 3) présente deux contacts glissants (20) pour la connexion électrique du dispositif à plaques de cuisson (1) mobile avec la paire de barres conductrices fixes (10),
- et dans lequel, pour l'alimentation électrique des chauffages électriques (19), une source de courant alternatif triphasé (14) avec un premier conducteur de phase (U), un deuxième conducteur de phase (V) et un troisième conducteur de phase (W) est prévue,
**caractérisé**
- **en ce que** la paire de barres conductrices (10) présente au moins trois sections (13) dans lesquelles différents couples de conducteurs de phase de la source de courant alternatif triphasé (14) sont raccordés aux deux barres conductrices (11, 12).

2. Dispositif de cuisson selon la revendication 1, **caractérisé**
- **en ce que** trois sections (13', 13", 13‴) sont prévues,
- **en ce que** le couplage de phases des premiers conducteurs de phase (U) et des seconds conducteurs de phase (V) est raccordé aux barres conductrices (11, 12) de la première section (13'),
- **en ce que** le couplage de phases des deuxièmes conducteurs de phase (V) et des troisièmes conducteurs de phase (W) est raccordé aux barres conductrices (11, 12) de la deuxième section (13"),
- et **en ce que** le couplage de phases des troisièmes conducteurs de phase (W) et des premiers conducteurs de phase (U) est raccordé aux barres conductrices (11, 12) de la troisième section (13‴).

3. Dispositif de cuisson selon la revendication 1 ou 2, **caractérisé**
- **en ce que** des isolateurs (21) sont prévus, qui isolent électriquement les barres conductrices (11, 12) d'une section de la paire de barres conductrices (10) des barres conductrices (11, 12) de la section adjacente (13) le long du parcours de la paire de barres conductrices (10),
- dans lequel les isolateurs (21) sont de préférence adaptés à la forme des barres conductrices (11, 12) et relient deux barres conductrices (11, 12) adjacentes de manière alignée,
- en particulier en ce que les isolateurs (21) sont dimensionnés le long du parcours de la paire de barres conductrices (10) au moins de manière à empêcher un court-circuit et/ou un arc électrique entre deux sections adjacentes (13) de la barre conductrice (11, 12) respective lors du passage des contacts glissants (20) au-dessus.

4. Dispositif de cuisson selon l'une des revendications 1 à 3, **caractérisé en ce qu'**au moins deux sources de courant alternatif triphasé (14', 14") sont prévues, les sources de courant alternatif triphasé (14', 14") étant en particulier les sorties de deux onduleurs triphasés différents (15).

5. Dispositif de cuisson selon l'une des revendications 1 à 4, **caractérisé**
- **en ce que** deux paires de barres conductrices (10', 10") parallèles l'une à l'autre sont prévues,
- dans lequel la première paire de barres conductrices (10') alimente en courant toutes les plaques inférieures (2),
- et dans lequel la deuxième paire de barres conductrices (10") alimente en courant toutes les plaques supérieures (3).

6. Dispositif de cuisson selon la revendication 5, **caractérisé**
- **en ce que** les deux paires de barres conductrices (10', 10") sont alimentées par la même source de courant alternatif triphasé (14),
- ou en ce que les paires de barres conductrices (10', 10") sont alimentées chacune par leur propre source de courant alternatif triphasé (14', 14").

7. Dispositif de cuisson selon l'une des revendications 4 à 6, **caractérisé**
- **en ce que** la paire de barres conductrices (10) ou les paires de barres conductrices (10', 10") présentent chacune au moins six sections (13),
- dans lequel les différentes paires de conducteurs de phase d'une première source de courant alternatif triphasé (14') sont raccordées aux barres conductrices (11, 12) de trois sections (13),
- et dans lequel les différentes paires de conducteurs de phase d'une deuxième source de courant alternatif triphasé (14") sont raccordées aux barres conductrices (11, 12) des trois autres sections (13),
- et dans lequel, dans le cas où d'autres sections (13) sont prévues, les différentes paires de conducteurs de phase sont raccordés à au moins une autre source de courant alternatif triphasé (14").

8. Dispositif de cuisson selon la revendication 7, **caractérisé**
- **en ce que** six sections (13', 13", 13"', 13ʺʺ, 13ʺʺ′, 13‴‴) sont prévues,
- **en ce que** les barres conductrices (11, 12) de la première section (13') sont raccordées à la paire de phases composée du premier conducteur de phase (U') et du deuxième conducteur de phase (V') de la première source de courant alternatif triphasé (14'),
- **en ce que** le couplage de phases des deuxièmes conducteurs de phase (V') et des troisièmes conducteurs de phase (W') de la première source de courant alternatif triphasé (14') est raccordé aux barres conductrices (11, 12) de la deuxième section (13"),
- **en ce que** le couplage de phases de troisième conducteurs de phase (W') et de premiers conducteurs de phase (U') de la première source de courant alternatif triphasé (14') est raccordé aux barres conductrices (11, 12) de la troisième section (13‴),
- **en ce que** le couplage de phases des premiers conducteurs de phase (U") et des seconds conducteurs de phase (V") de la seconde source de courant alternatif triphasé (14") est raccordé aux barres conductrices (11, 12) de la quatrième section (13ʺʺ).
- **en ce que** le couplage de phases de deuxième conducteurs de phase (V") et de troisième conducteurs de phase (W") de la deuxième source de courant alternatif triphasé (14") est raccordé aux barres conductrices (11, 12) de la cinquième section (13ʺʺ′),
- et **en ce que** le couplage de phases de troisième conducteurs de phase (W") et de premier conducteurs de phase (U") de la deuxième source de courant alternatif triphasé (14") est raccordé aux barres conductrices (11, 12) de la sixième section (13""").

9. Dispositif de cuisson selon l'une des revendications 4 à 8, **caractérisé**
- **en ce que** les deux sources de courant alternatif triphasé (14', 14") alimentent les barres conductrices (11, 12) avec des puissances électriques différentes, en particulier sélectionnables,
- et en particulier en ce que les dispositifs à plaques de cuisson (1) sont chauffés dans la zone des sections (13', 13", 13"') de la première source de courant alternatif triphasé (14') avec une puissance de chauffage différente de celle utilisée dans la zone des sections (13"", 13ʺʺ′, 13""") de la deuxième source de courant alternatif triphasé (14").

10. Dispositif de cuisson selon la revendication 9, **caractérisé**
- **en ce que** la première source de courant alternatif triphasé (14', 14") est reliée à trois sections (13) adjacentes le long du parcours de la paire de barres conductrices (10),
- **en ce que** la deuxième source de courant alternatif triphasé (14', 14") est reliée à trois sections (13) adjacentes le long du parcours de la paire de barres conductrices (10),
- et **en ce que** deux zones de chauffage différentes, disposées l'une après l'autre le long du parcours de la paire de barres conductrices (10), sont ainsi formées.

11. Dispositif de cuisson selon l'une des revendications 1 à 10, **caractérisé en ce que** chaque plaque de cuisson (2, 3) est alimentée en courant uniquement par une seule section (13).

12. Dispositif de cuisson selon l'une des revendications 1 à 11, **caractérisé**
- **en ce que** toutes les sections (13) dans lesquelles sont raccordées aux deux barres conductrices (11, 12) différentes paires de conducteurs de phase d'une source de courant alternatif triphasé (14) présentent la même longueur,
- et/ou en ce que toutes les sections (13) dans lesquelles différentes paires de conducteurs de phase d'une source de courant alternatif triphasé (14) sont raccordées aux deux barres conductrices (11, 12) alimentent en courant électrique le même nombre de plaques de cuisson (2, 3).

13. Dispositif de cuisson selon l'une des revendications 1 à 12, **caractérisé**
- **en ce que** la paire de barres conductrices (10) présente une section de mesure (16),
- et **en ce que** dans la section de mesure (16) est prévu un dispositif de mesure (17) qui mesure les paramètres électriques des plaques de cuisson (2, 3), en particulier la résistance électrique du chauffage (19) des plaques de cuisson (2, 3) et/ou la résistance électrique ou l'isolation par rapport à la terre.

14. Dispositif de cuisson selon la revendication 13, **caractérisé**
- **en ce que** le dispositif de mesure (17) enregistre en continu, de préférence à chaque passage, les paramètres des plaques de cuisson (2, 3) transportées à travers la section de mesure (16),
- en particulier en ce qu'une base de données (18) est prévue, dans laquelle les paramètres enregistrés par le dispositif de mesure (17) sont stockés et, éventuellement, attribués à une valeur identifiant la plaque de cuisson (2, 3).

15. Dispositif de cuisson selon l'une des revendications 13 ou 14, **caractérisé en ce que** la section de mesure (16) est prévue en plus des sections conductrices de courant (13) de la paire de barres conductrices (10) ou des paires de barres conductrices (10).
